# EUROPÄISCHE PATENTSCHRIFT

(11) **EP 1 133 912 B1**
(45) Veröffentlichungstag und Bekanntmachung des Hinweises auf die Patenterteilung: **21.12.2005**
(21) Anmeldenummer: 01104988.9
(22) Anmeldetag: 01.03.2001
(51) Int. Cl.: A01D 57/02

(54) **Hydraulischer Antrieb für ein Einzugsorgan einer Gutaufnahmeeinrichtung**
Hydraulic drive for a feeding organ of a header
Entraînement hydraulique pour un organe d'amenage d'un tablier de coupe

(30) Priorität: 14.03.2000 DE 10012056
(43) Veröffentlichungstag der Anmeldung: 19.09.2001
(73) Patentinhaber: CLAAS Selbstfahrende Erntemaschinen GmbH, 33428 Harsewinkel (DE)
(72) Erfinder: Eis, Günter, 33428 Harsewinkel (DE); Striecker, Norbert, 3334 Gütersloh (DE)

(56) Entgegenhaltungen:
- DE-A- 3 708 550
- FR-A- 2 102 300
- GB-A- 1 152 204

## Beschreibung

Die Erfindung betrifft eine mit Einzugsorganen versehene Gutaufnahmeeinrichtung für eine landwirtschaftliche Erntemaschine, die einen aus Motor und Pumpe bestehenden hydraulischen Antrieb für ein Einzugsorgan der Gutaufnahmeeinrichtung aufweist.

Die FR-A-2102300 offenbart einen Antrieb einer Einzugshaspel eines selbstfahrenden Mähdreschers, der eine Zahnradpumpe mit konstantem Fördervolumen verwendet. Die Zahnradpumpe muss entsprechend groß ausgelegt sein, um den Haspelmotor auch bei Vollast mit der notwendigen Ölmenge versorgen zu können. Bei geringerer Leistung als bei Vollast wird die von der Zahnradpumpe zuviel geförderte, von dem Haspelmotor nicht benötigte Ölmenge über ein zwischen der Zahnradpumpe und dem Haspelmotor geschaltetes Stromregelventil direkt in den Tank zurückgeführt. Aufgrund der Tatsache, dass die Zahnradpumpe stets die vom Haspelmotor maximal benötigte Ölmenge fördern muß, diese Ölmenge aber nur in seltenen Fällen abgenommen wird, arbeitet diese Art des Haspelantriebes mit sehr schlechtem Wirkungsgrad. Als weiterer Nachteil kommt hinzu, dass das Öl von der Auslaufseite des Haspelmotors aus frei in den Tank zurückfließt, so dass bei einem Lastwechsel ein einwandfreier Rundlauf nicht mehr gewährleistet ist. Weiterhin ergibt sich bei dem bekannten Haspelantrieb der Nachteil, dass zum Reversieren der Haspel zusätzliche Ventile eingesetzt und geschaltet werden müssen.

Der vorliegenden Erfindung liegt daher die Aufgabe zugrunde, den hydraulischen Antrieb für ein Einzugsorgan einer Gutaufnahmeeinrichtung einer landwirtschaftlichen Erntemaschine so auszugestalten, dass er bei gutem Wirkungsgrad einen stabilen Rundlauf gewährleistet und ohne zusätzlichen Aufwand problemlos reversierbar ist.

Diese Aufgabe wird dadurch gelöst, dass die Antriebspumpe für den Motor des Einzugsorgans eine Hydraulikpumpe mit über einen Stellhebel stufenlos einstellbaren Förderstrom ist und dass die Hydraulikpumpe und der Motor des Einzugsorgans in einem geschlossenen Ölkreis arbeiten. Bei einem so ausgestalteten Antrieb des Einzugsorgans fördert die Hydraulikpumpe nur noch so viel Öl, wie der Motor für seinen momentanen Betrieb benötigt. Des weiteren ist gewährleistet, dass durch das Arbeiten im geschlossenen Ölkreislauf ein stabiler Rundlauf erreicht wird.

Ein weiteres Merkmal der Erfindung wird darin gesehen, dass von einer von der Niederdruckseite des hydrostatischen Fahrantriebes ausgehenden Leitung eine Leitung zur Einlassseite und eine andere Leitung zur Auslassseite der Hydraulikpumpe führt, in die je ein Rückschlagventil eingebaut ist, welches den Rückfluß des Öls von der Hydraulikpumpe zu der Leitung sperrt, die vom hydrostatischen Fahrantrieb ausgeht. Durch eine derartige Anordnung ist gewährleistet, dass fehlendes Öl in dem geschlossenen Arbeitskreislauf für die Hydraulikpumpe und den Motor jederzeit ersetzt wird.

Ein wesentliches Merkmal der Erfindung ist darin zu sehen, dass von der durch den normalen Guteinzugsbetrieb bestimmten vom Motor zur Hydraulikpumpe führenden Rücklaufleitung eine Tankleitung abzweigt, in die ein Spülventil eingebaut ist. Durch ein solches an sich bekanntes Spülventil ist gewährleistet, dass aus dem geschlossenen Ölkreislauf stets eine gewisse Menge zum Tank fließen kann und diese Menge durch frisches Öl ersetzt wird, und zwar durch die Anordnung, die im vorstehenden Absatz näher beschrieben ist.

Während eines Reversiervorganges wird das Einzugsorgan mit nur geringer Drehzahl angetrieben, folglich muß die Hydraulikpumpe so eingestellt werden, dass sie nur einen geringen Ölstrom fördert. Da aber in die beim Reversiervorgang von der Hydraulikpumpe zum Motor führenden Leitung ein Spülventil eingesetzt ist, besteht die Gefahr, dass über das Spülventil eine so große Ölmenge abgzweigt und in den Tank geleitet wird, dass zum korrekten Betreiben des Motors zuwenig Öl zur Verfügung steht. Um dies zu vermeiden, schlägt die Erfindung vor, das Spülventil während des Reversierens des Einzugsorgans beispielsweise zum Zwecke eines Gutstauabbaus zu sperren und zwar von dem von der Hydraulikpumpe zum Motor strömenden unter Druck stehenden Öles selbst. Natürlich besteht auch beim Reversieren die Möglichkeit, die Drehzahl des Einzugsorgans zu erhöhen, um beispielsweise den Mähtisch beschleunigt mit Hilfe des Einzugsorgans auszuräumen.

Es ist zweckmäßig, den Stellhebel der Hydraulikpumpe mittels eines Linearantriebes, beispielsweise einer Kolbenzylindereinheit, über ein 3-3-Wegeventil derart zu betätigen, dass der Stellhebel von einer Neutralstellung aus lediglich zu einer Seite hin verstellbar ist. Zum Zwecke des Reversierens braucht dann lediglich die Drehrichtung der Hydraulikpumpe umgekehrt zu werden.

Im folgenden soll die Erfindung anhand eines Ausführungsbeispieles und zweier dieses schematisch darstellender Figuren näher erläutert werden. Dabei zeigt:

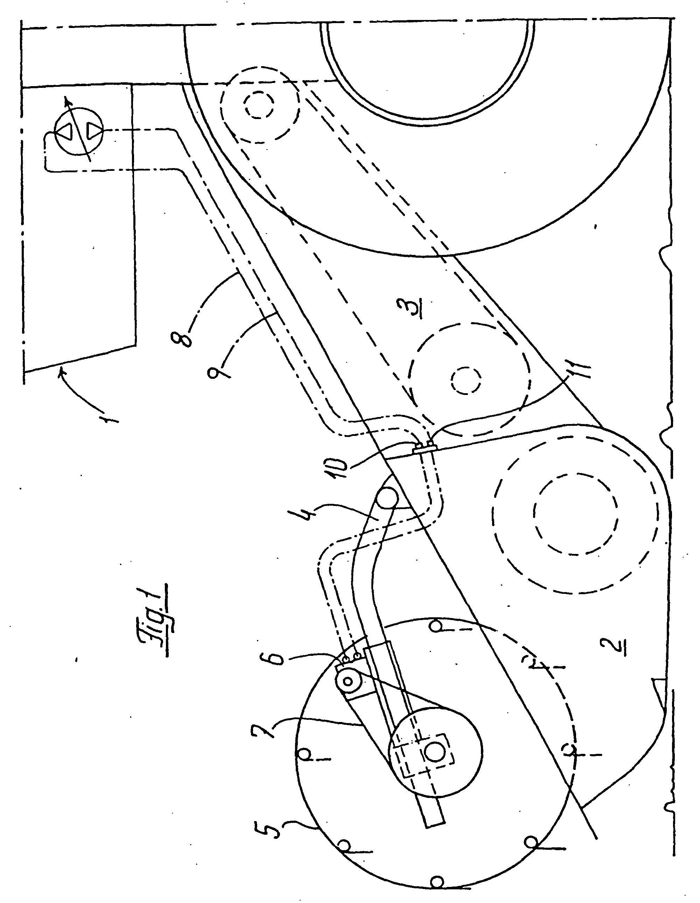

- Figur 1: einen selbstfahrenden Mähdrescher in der Seitenansicht und ;
- Figur 2: einen Schaltplan für den Antrieb der Haspel des Mähdreschers nach Figur 1.

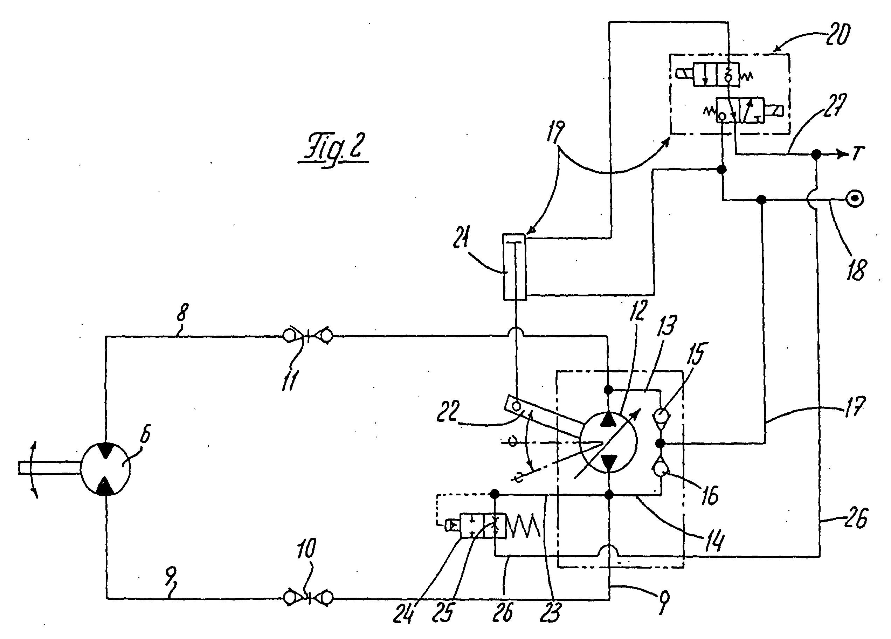

Mit 1 ist ein selbstfahrender Mähdrescher bezeichnet, der an seinem frontseitigen Ende eine Schneidwerksmulde 2 als Gutaufnahmeeinrichtung über einen Schrägförderer 3 trägt. Mit der Schneidwerksmulde 2 ist über Arme 4 die Haspel 5 als Beispiel für ein Einzugsorgan in an sich bekannter Weise verbunden. Sie wird über einen Motor 6 und eine diesem zugeordnete Kette 7 angetrieben. Von diesem Haspelmotor 6 führen Leitungen 8 und 9 zu Schnellkupplungen 10 und 11 und verlaufen von dort weiter zu einer Hydraulikpumpe 12. Auf nicht dargestellte Art und Weise ist diese beispielsweise mit dem Schneidwerksantrieb verbunden und läuft mit diesem bedarfsweise vorwärts oder rückwärts bezogen auf seine Drehrichtung. In dem dargestellten Ausführungsbeispiel stellt die Leitung 8 die Vorlaufleitung und die Leitung 9 die Rücklaufleitung dar und zwar während des Einzugsbetriebes der Haspel. Im Bereich der Pumpe 12 zweigen von den Leitungen 8 und 9 Leitungen 13 und 14 ab, in die jeweils ein Rückschlagventil 15 und 16 eingebaut sind. Von dort aus münden beide Leitungen 13 und 14 in eine Leitung 17, die mit der Leitung 18 verbunden ist. Letztere ist vom hydrostatischen Fahrantrieb des Mähdreschers abgezweigt und steht etwa unter 20 bar Druck. Die Rückschlagventile 15 und 16 sind so in die Leitungen 13 und 14 eingebaut, dass jederzeit bei Bedarf dem geschlossenen Ölkreislauf (Haspelmotor 6, Leitungen 8 und 9 und Hydraulikmotor 12) Öl zugeführt werden kann. Die Niederdruckleitung 18 steht weiterhin mit einem hydraulischen Linearantrieb in Verbindung, der als ganzes mit 19 bezeichnet ist. Er besteht aus einem 3-3-Wegeventil 20, einer hydraulischen Kolbenzylindereinheit 21 und einem von der hydraulischen Kolbenzylindereinheit 21 betätigbaren Stellhebel 22. Über diesen Stellhebel 22 kann die Förderleistung der Hydraulikpumpe 12 von 0 bis zum einem Maximum verstellt werden. Wie der Schaltplan gemäß Figur 2 erkennen lässt, führt von der Rücklaufleitung 9 aus eine Leitung 23 zu einem Spülventil 24, welches mit einer Blende 25 versehen ist. Von dieser Blende 25 beziehungsweise vom Spülventil 24 aus ist eine weitere Leitung 26 mit einer Tankleitung 27 verbunden, die vom 3-3-Wegeventil 20 ausgeht. Im Normalbetrieb ist über das Ventil 20 der Stellhebel 22 so verstellt, dass das von der Hydraulikpumpe 12 ausgehende Öl über die Leitung 8 und die Schnellkupplung 10 zum Haspelmotor 6 und von dort aus über die Leitung 9 und die Schnellkupplung 11 zurück zum Motor läuft. Aus dem zurückfließenden Ölstrom wird über die Leitung 23 eine geringe Menge durch die Blende 25 über die Leitungen 26 und 27 abgezweigt. Die Ölmenge, die abgezweigt wird, wird ständig ersetzt über die Leitungen 17 beziehungsweise 13. Um die Drehrichtung der Haspel zu ändern, was beispielsweise bei einer Verstopfung der Einzugsorgane erforderlich wird, wird lediglich die Drehrichtung der Hydraulikpumpe 12 geändert, so dass dann das von der Pumpe 12 geförderte Öl über die Leitung 9 zum Haspelmotor 6 und von dort über die Leitung 8 zurück zum Hydraulikmotor 12 geführt wird. Um zu verhindern, dass während des Reversiervorganges aus dem vorlaufenden Ölstrom durch das Spülventil 24 abgezweigt wird, ist dieses Ventil so ausgelegt, dass es von dem Öldruck geschlossen wird, der in der Leitung 9 ansteht, die während des Reversiervorganges die Vorlaufleitung zum Haspelmotor 6 bildet.

### Bezugszeichenliste

- 1 -: selbstfahrender Mähdrescher
- 2 -: Schneidwerksmulde
- 3 -: Schrägförderer
- 4 -: Arme
- 5 -: Haspel
- 6 -: Haspelmotor
- 7 -: Kette
- 8 -: Leitung
- 9 -: Rücklaufleitung
- 10 -: Schnellkupplung
- 11 -: Schnellkupplung
- 12 -: Hydraulikpumpe/Hydraulikmotor
- 13 -: Leitung
- 14 -: Leitung
- 15 -: Rückschlagventil
- 16 -: Rückschlagventil
- 17 -: Leitung
- 18 -: Niederdruckleitung
- 19 -: hydraulischer Linearantrieb
- 20 -: 3-3-Wegeventil
- 21 -: hydraulische Kolbenzylindereinheit
- 22 -: Stellhebel
- 23 -: Leitung
- 24 -: Spülventil
- 25 -: Blende
- 26 -: Leitung
- 27 -: Tankleitung

## Patentansprüche

1. Mit Einzugsorganen versehene Gutaufnahmeeinrichtung für eine landwirtschaftliche Erntemaschine, die einen aus Motor und Pumpe bestehenden hydraulischen Antrieb für ein Einzugsorgan der Gutaufnahmeeinrichtung aufweist,
**dadurch gekennzeichnet,**
**dass** die Antriebspumpe für den Motor (6) des Einzugsorgans eine Hydraulikpumpe (12) mit über einen Stellhebel (22) stufenlos einstellbaren Förderstrom ist und dass die Hydraulikpumpe (12) und der Motor (6) des Einzugsorgans in einem geschlossenen Ölkreis arbeiten.

2. Gutaufnahmeeinrichtung nach Anspruch 1,
**dadurch gekennzeichnet,**
**dass** von einer von der Niederdruckseite des hydrostatischen Fahrantriebes ausgehenden Leitung (17) eine Leitung (14) zur Einlassseite und eine andere Leitung (13) zur Auslassseite der Hydraulikpumpe 12 führt, in die je ein Rückschlagventil (15, 16) eingebaut ist, welches den Rückfluß des Öls von der Hydraulikpumpe (12) zu der Leitung 17 entsperrt, die vom hydrostatischen Fahrantrieb ausgeht.

3. Gutaufnahmeeinrichtung nach den Ansprüchen 1 und 2,
**dadurch gekennzeichnet,**
**dass** von der durch den normalen Gutflußbetrieb bestimmten vom Motor (6) zur Hydraulikpumpe (12) führenden Rücklaufleitung (9) eine Tankleitung (23, 26, 27) abzweigt, in die ein Spülventil (24) eingebaut ist.

4. Gutaufnahmeeinrichtung nach Anspruch 3,
**dadurch gekennzeichnet,**
**dass** das Spülventil (24) während des Reversiervorganges des Einzugsorgans (5) selbsttätig sperrbar ist.

5. Gutaufnahmeeinrichtung nach den Ansprüchen 3 und 4
**dadurch gekennzeichnet,**
**dass** das Spülventil (24) durch den zum Zwecke des Reversierens des Einzugsorgans (5) von der Hydraulikpumpe (12) zum Motor (6) strömenden Ölflusses sperrbar ist.

6. Gutaufnahmeeinrichtung nach den Ansprüchen 1 bis 5,
**dadurch gekennzeichnet,**
**dass** der Stellhebel (22) der Hydraulikpumpe (12) mittels eines Linearantriebes, beispielsweise einer hydraulischen Kolbenzylindereinheit (21) über ein 3-3-Wegeventil (22) derart betätigbar ist, dass der Stellhebel (22) von einer Neutralstellung aus lediglich zu einer Seite hin verstellbar ist.

7. Gutaufnahmeeinrichtung nach den Ansprüchen 1 bis 6,
**dadurch gekennzeichnet,**
**dass** die Speiseölversorgung aus dem Speisekreis der Fahrantriebshydraulik entnommen wird.

## Claims

1. A material pick-up device provided with intake members for an agricultural harvester, which has a hydraulic drive comprising a motor and a pump for an intake member of the material pick-up device,
**characterised in that**
the drive pump for the motor (6) of the intake member is a hydraulic pump (12) with a delivery flow which is steplessly adjustable by way of an adjusting lever (22) and that the hydraulic pump (12) and the motor (6) of the intake member operate in a closed oil circuit.

2. A material pick-up device according to claim 1 **characterised in that** one line (14) leads to the inlet side of the hydraulic pump (12) from a line (17) extending from the low-pressure side of the hydrostatic travel drive and another line (13) leads therefrom to the outlet side of the hydraulic pump (12), in each of which lines is fitted a respective non-return valve (15, 16) which blocks the return flow of oil from the hydraulic pump (12) to the line (17) which extends from the hydrostatic travel drive.

3. A material pick-up device according to claims 1 and 2 **characterised in that** a tank line (23, 26, 27) into which is fitted a flushing valve (24) branches from the return line (9) which is determined by the normal material flow operation and which leads from the motor (6) to the hydraulic pump (12).

4. A material pick-up device according to claim 3 **characterised in that** the flushing valve (24) is automatically closable during the reversal process of the intake member (5).

5. A material pick-up device according to claims 3 and 4 **characterised in that** the flushing valve (24) is closable by the oil flow which flows from the hydraulic pump (12) to the motor (6) for the purposes of reversing the intake member (5).

6. A material pick-up device according to claims 1 to 5 **characterised in that** the adjusting lever (22) of the hydraulic pump (12) is actuable by means of a linear drive, for example a hydraulic piston-cylinder unit (21), by way of a 3-3-way valve (22), in such a way that the adjusting lever (22) is displaceable from a neutral position only towards one side.

7. A material pick-up device according to claims 1 to 6 **characterised in that** the feed oil supply is taken from the feed circuit of the travel drive hydraulic system.

## Revendications

1. Dispositif de ramassage de produit récolté pourvu d'organes d'amenage pour une machine agricole de récolte, lequel comporte un moyen d'entraînement hydraulique constitué d'un moteur et d'une pompe pour un organe d'amenage du dispositif de ramassage de produit récolté, **caractérisé en ce que** la pompe d'entraînement du moteur (6) de l'organe d'amenage est une pompe hydraulique (12) dont le débit de sortie est réglable de façon continue par l'intermédiaire d'un levier de réglage (22), et **en ce que** la pompe hydraulique (12) et le moteur (6) de l'organe d'amenage fonctionnent dans un circuit d'huile fermé.

2. Dispositif de ramassage de produit récolté selon la revendication 1, **caractérisé en ce que** d'une conduite (17) partant du côté basse pression du groupe propulseur hydrostatique partent une conduite (14) qui mène au côté entrée de la pompe hydraulique (12) et une autre conduite (13) qui mène au côté sortie de celle-ci, sur chacune desdites conduites étant implantée une valve antiretour (15, 16) qui empêche l'huile de refluer de la pompe hydraulique (12) vers la conduite (17) provenant du groupe propulseur hydrostatique.

3. Dispositif de ramassage de produit récolté selon les revendications 1 et 2, **caractérisé en ce que** de la conduite de retour (9) menant du moteur (6) à la pompe hydraulique (12), définie par le mode normal d'amenage de produit récolté, dérive une conduite de retour au réservoir (23, 26, 27) sur laquelle est implantée une valve de purge (24).

4. Dispositif de ramassage de produit récolté selon la revendication 3, **caractérisé en ce que** la valve de purge (24) peut être fermée automatiquement lorsque le fonctionnement de l'organe d'amenage (5) est suspendu.

5. Dispositif de ramassage de produit récolté selon les revendications 3 et 4, **caractérisé en ce que** la valve de purge (24) peut être fermée par le flux d'huile mis en circulation de la pompe hydraulique (12) au moteur (6) pour suspendre le fonctionnement de l'organe d' amenage (5).

6. Dispositif de ramassage de produit récolté selon les revendications 1 à 5, **caractérisé en ce que** le levier de réglage (22) de la pompe hydraulique (12) peut être actionné à l'aide d'une commande linéaire, par exemple d'un ensemble piston-cylindre hydraulique (21), par l'intermédiaire d'une valve de distribution à 3 voies/3 directions (22), de façon qu'à partir d'une position neutre le levier de réglage (22) ne puisse être déplacé que d'un côté.

7. Dispositif de ramassage de produit récolté selon les revendications 1 à 6, **caractérisé en ce que** l'huile d'alimentation fournie est prélevée sur le circuit d'alimentation de l'hydraulique du groupe propulseur.
